# EUROPEAN PATENT APPLICATION

(11) **EP 4 270 774 A1**
(43) Date of publication of application: **01.11.2023**
(21) Application number: 21910316.5
(22) Date of filing: 08.12.2021
(51) Int. Cl.: H02P 29/00

(54) **MOTOR CONTROL DEVICE**

(30) Priority: 24.12.2020 JP 2020214499
(71) Applicant: Panasonic Intellectual Property Management Co., Ltd., Kadoma-shi, Osaka 571-0057 (JP)
(72) Inventor: FUJIWARA, Hiroshi, Osaka 571-0057 (JP); MURAKAMI, Kenta, Osaka 571-0057 (JP)
(74) Representative: SSM Sandmair
(86) International application number: PCT/JP2021/045123
(87) International publication number: WO 2022/138167

(57) **Abstract**

Provided is a motor control device that controls a motor to achieve quick positioning of a load within a predetermined range from a target position. Provided is motor control device (10) configured to control motor (70) that moves load (80) to a target position. Motor control device (10) includes correction command generator (30), corrector (40), and controller (50). Correction command generator (30) acquires a target position deviation indicating a difference between a position of load (80) and the target position. When the target position deviation indicates that load (80) is positioned beyond the target position, a correction command for correcting the position command is generated based on the target position deviation. Corrector (40) corrects the position command based on the correction command to generate the corrected position command. Controller (50) controls motor (70) based on the corrected position command and a position of motor (70).

## Description

### TECHNICAL FIELD

The present disclosure relates to a motor control device that controls a motor.

### BACKGROUND ART

A motor control device that controls a motor so that a load reaches a target position is conventionally known (e.g., see PTL 1).

### Citation List

### Patent Literature

PTL 1: Unexamined Japanese Patent Publication No. 2014-203365

### SUMMARY OF THE INVENTION

When the load is positioned at the target position, the load is desired to be quickly positioned within a predetermined range from the target position.

Thus, it is an object of the present disclosure to provide a motor control device capable of controlling a motor to achieve quick positioning of a load within a predetermined range from a target position.

A motor control device according to an aspect of the present disclosure controls a motor that moves a load to a target position based on a position command for instructing a position of the motor. The motor control device includes a correction command generator, a corrector, and a controller. The correction command generator acquires a target position deviation indicating a difference between a position of the load and the target position. When the target position deviation indicates that the load is positioned beyond the target position, the correction command generator generates a correction command for correcting the position command based on the target position deviation. The corrector corrects the position command based on the correction command to generate a corrected position command. The controller controls the motor based on the corrected position command and a position of the motor.

The above configuration provides a motor control device capable of controlling a motor to quick movement of a load from a target position to a predetermined range.

### BRIEF DESCRIPTION OF THE DRAWINGS

Fig. 1 is a block diagram illustrating a configuration example of a positioning system according to an exemplary embodiment.
Fig. 2 is a schematic diagram illustrating an example of a state in which a motor according to an exemplary embodiment positions a load at a target position.
Fig. 3A is a schematic diagram illustrating an example of a state in which a load according to an exemplary embodiment is positioned at a target position.
Fig. 3B is a schematic diagram illustrating an example of a state in which a load according to an exemplary embodiment is positioned at a position different from a target position.
Fig. 4 is a flowchart of position deviation correction processing according to an exemplary embodiment.
Fig. 5A is a schematic diagram illustrating an example of a temporal change of the amount of correction in a correction command output by a correction command generator according to exemplary embodiment.
Fig. 5B is a schematic diagram illustrating an example of a state in which a load according to an exemplary embodiment is positioned within a predetermined range from a target position.
Fig. 6 is a schematic diagram illustrating an image captured by a camera at a certain time in an exemplary embodiment.
Fig. 7 is a diagram illustrating whether a motor control device according to an exemplary embodiment causes a load to exceed a target position and how to control the load with the motor control device when the load exceeds the target position.
Fig. 8 is a diagram illustrating a second another configuration example of a motor control device according to an aspect of the present disclosure, in which a position command is corrected with a value obtained by adding a predetermined offset to a target position deviation.
Fig. 9 is a diagram illustrating a third another configuration example of a motor control device according to an aspect of the present disclosure, in which a position command is corrected with the amount of correction that is a value obtained by multiplying a target position deviation by a weighting coefficient.
Fig. 10 is a diagram illustrating a target position deviation in the present exemplary embodiment, the target position deviation having no change while indicating that the target position deviation exceeds a target value after a predetermined time elapses.
Fig. 11 is a diagram illustrating a fourth another configuration example of a motor control device according to an aspect of the present disclosure, in which a new amount of correction is set after a target position deviation exceeds a target value and a predetermined time elapses.

### DESCRIPTION OF EMBODIMENT

### (Background to obtain an aspect of the present disclosure)

PTL 1 describes a control system that positions a load without exceeding a target position. This control system includes a servo unit for controlling a motor that positions a load, the servo unit controlling the motor based on an internal command from a main control unit that is a host controller. This control system positions the load without exceeding the target position as follows: causing the motor to decelerate positioning speed of the load when the load approaches the target position; repeatedly performing imaging of the load and image processing of the captured image; and feeding back a result of the image processing to an internal command every time the image processing is performed.

When the control system for positioning the load can position the load within a predetermined range from the target position, the control system does not necessarily need to position the load without exceeding the target position. This kind of system is desired to position the load quickly.

Thus, the inventors have conducted intensive studies and experiments on a motor control device capable of controlling a motor to achieve quick positioning of a load within a predetermined range from a target position. As a result, the inventors have conceived a motor control device below.

A motor control device according to an aspect of the present disclosure controls a motor that positions a load at a target position based on a position command for instructing a position of the motor. The motor control device acquires a target position deviation indicating a difference between a position of the load and the target position. When the target position deviation indicates that the load is positioned beyond the target position, the correction command generator generates a correction command for correcting the position command based on the target position deviation. The corrector corrects the position command based on the correction command to generate a corrected position command. The controller controls the motor based on the corrected position command and a position of the motor.

The motor control device having the above configuration acquires the target position deviation and corrects the position command based on the acquired target position deviation. Thus, the motor control device having the above configuration does not need to cause a host controller side to feed back information related to a position of the load, the host controller side being configured to output a position command to a motor drive device. Thus, the motor control device having the above configuration is capable of controlling the motor to achieve quick positioning of the load within a predetermined range from the target position. The motor control device having the above configuration also does not necessarily need to decelerate the positioning speed of the load even when the load approaches the target position. Thus, the motor control device having the above configuration is capable of controlling the motor to achieve quicker positioning of the load within the predetermined range from the target position.

The correction command generator may generate the correction command for correcting the position command to instruct a correction command position shifted by the target position deviation from a command position instructed by the position command.

As a result, the correction command position can be shifted from the command position by the target position deviation.

When an amount of correction according to the correction command has an absolute value smaller than or equal to an absolute value of the amount of correction according to the correction command input last time from the correction command generator, the corrector may not update the correction command input last time from the correction command generator.

The correction command generator may set an amount of correction using a value obtained by adding a predetermined offset to the target position deviation or a value obtained by multiplying the target position deviation by a predetermined weighting coefficient.

When the target position deviation does not change even when a predetermined time elapses while indicating that the load exceeds the target position, the correction command generator may set an amount of correction of the next correction command by subtracting a target position deviation input subsequently from the amount of correction of the correction command output last time.

Additionally, a target position deviation calculator that calculates the target position deviation may be provided, and the target position deviation calculator may include: a camera that is positioned together with the load by the motor and captures an image; and a calculator that calculates the target position deviation when the target position is included in the image based on the image captured by the camera.

As a result, the motor can be controlled without acquiring the target position deviation from the outside.

Hereinafter, a specific example of a motor control device according to an aspect of the present disclosure will be described with reference to the drawings. Exemplary embodiments described herein is a specific example of the present disclosure. Numerical values, shapes, constituent components, arrangement positions and connection modes of the constituent components, steps, order of the steps, and the like illustrated in the following exemplary embodiments are merely examples, and thus are not intended to limit the present disclosure. Each of the drawings is a schematic view, and is not necessarily precisely illustrated.

Comprehensive or specific aspects of the present disclosure may be achieved by a system, a method, an integrated circuit, a computer program, or a recording medium such as a computer-readable CD-ROM, or may be achieved by any combination of the system, the method, the integrated circuit, the computer program, and the recording medium.

### (Exemplary embodiment)

### <Configuration>

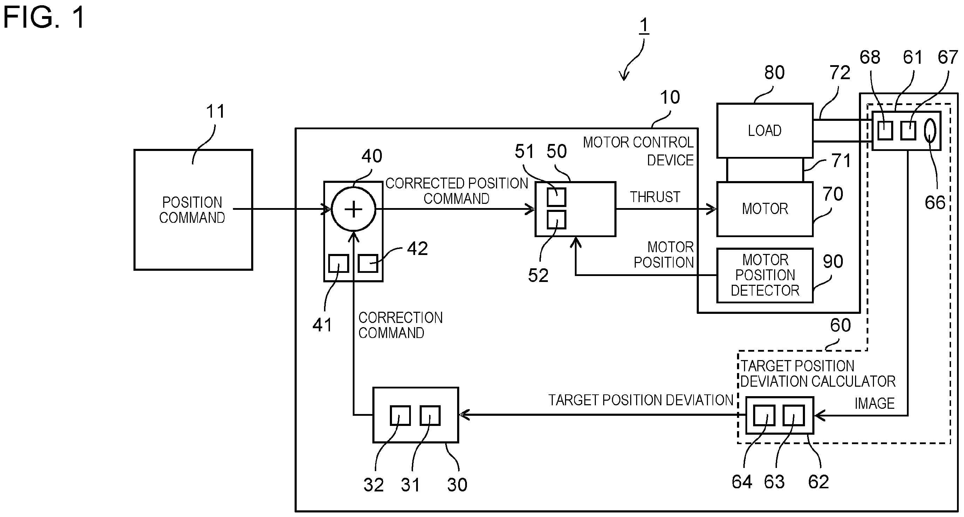

Fig. 1 is a block diagram illustrating a configuration example of positioning system 1 according to an exemplary embodiment.

As illustrated in Fig. 1, positioning system 1 includes motor control device 10, motor 70, load 80, motor position detector 90, connecting part 71, and connecting part 72.

Motor 70 is controlled by motor control device 10 to move load 80 to a target position.

Load 80 is connected to motor 70 by connecting part 71 and moved by motor 70.

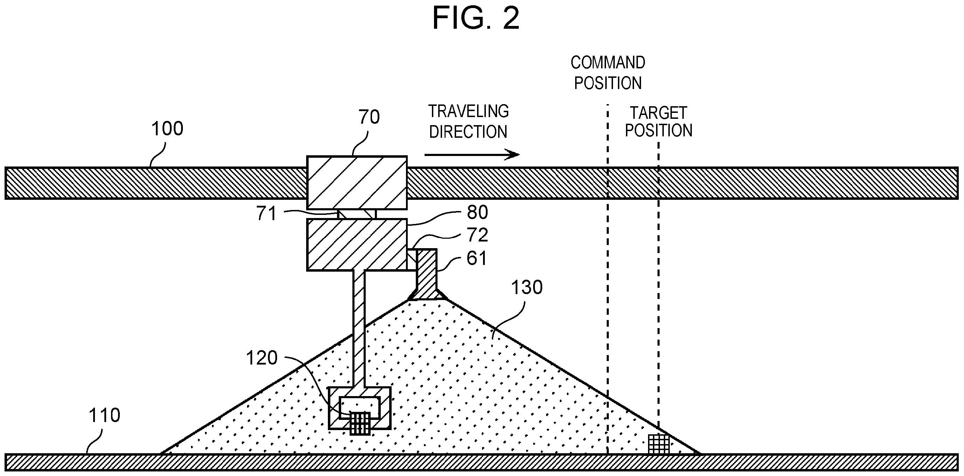

Fig. 2 is a schematic diagram illustrating an example of a state in which motor 70 moves load 80 to a target position. Fig. 2 is a diagram illustrating an example of a transport device.

As illustrated in Fig. 2, motor 70 is a linear motor movable along guide 100, for example. Although motor 70 will be described below as a linear motor, the motor is not necessarily limited to the example of the linear motor as long as the motor can move load 80 to a target position, and thus may be a rotary motor or a linear motion mechanism in which a rotary motor and a drive mechanism such as a ball screw are combined, for example.

As illustrated in Fig. 2, load 80 includes an arm capable of gripping work object 120 that is to be placed at a predetermined place on stage 110, for example. When load 80 is positioned at a target position by the motor 70, for example, load 80 releases gripped work object 120 at the target position to place work object 120 at a predetermined place on stage 110.

Returning again to Fig. 1, positioning system 1 will be continuously described.

Motor position detector 90 detects a position of motor 70, and outputs the detected position of motor 70 to motor control device 10. When motor 70 is a linear motor, for example, motor position detector 90 may be a linear scale. When motor 70 is a rotary motor, for example, motor position detector 90 may be an encoder. When motor 70 is a linear motor, for example, a position of motor 70 may be a position of a mover. For example, when motor 70 is a rotary motor, a position of motor 70 may be an angle of a rotor.

Motor control device 10 controls motor 70 based on a position command for instructing a position of motor 70. For example, the position command is output from host controller 11 connected to motor control device 10 via a communication line or the like.

As illustrated in Fig. 1, motor control device 10 includes correction command generator 30, corrector 40, controller 50, and target position deviation calculator 60.

Target position deviation calculator 60 calculates a target position deviation indicating a difference between a position of load 80 and a target position. As illustrated in Fig. 1, target position deviation calculator 60 includes camera 61 and calculator 62.

Camera 61 is moved together with load 80 by motor 70, and captures an image at each of one or more times. That is, camera 61 is an imaging device. For example, camera 61 may include lens 66 that condenses light, solid-state imaging element 67 that converts the light condensed by the lens into an electric signal, and memory 68 that stores the electric signal converted by the solid-state imaging element.

As illustrated in Fig. 2, camera 61 is connected to load 80 by connecting part 72, for example, and captures an image of a field of view 130. When camera 61 is present at a position where a target position is included in the field of view 130, camera 61 captures an image including the target position. Although target position deviation calculator 60 in Fig. 2 includes one camera 61, it may include multiple cameras 61.

Returning again to Fig. 1, positioning system 1 will be continuously described.

Based on each of images captured by camera 61, when the target position is included in a target image, calculator 62 calculates a target position deviation corresponding to the target image. Calculator 62 may include processor 63 and memory 64, for example, and have functions to be implemented by processor 63 executing a program stored in memory 64.

For example, calculator 62 performs image processing on an image captured by camera 61 to determine whether the target position is included in the image. Then, when determining that the target position is included in the image, calculator 62 performs further image processing and calculates a target position deviation, for example.

Correction command generator 30 acquires the target position deviation calculated by target position deviation calculator 60. When the acquired target position deviation indicates that load 80 is positioned beyond the target position, correction command generator 30 generates a correction command for correcting the position command based on the target position deviation. Correction command generator 30 may include processor 31 and memory 32, for example, and have functions to be implemented by processor 31 executing a program stored in memory 32.

For example, correction command generator 30 generates a correction command for correcting the position command to instruct a correction command position shifted from the command position instructed by the position command by the target position deviation.

Corrector 40 acquires a position command, and corrects the acquired position command based on the correction command generated by correction command generator 30 to generate a corrected position command. Corrector 40 may include processor 41 and memory 42, for example, and have functions to be implemented by processor 41 executing a program stored in memory 42.

Controller 50 controls motor 70 based on the corrected position command generated by corrector 40 and the position of motor 70 output by motor position detector 90. Controller 50 may include inverter 51 that generates three-phase alternating current for generating thrust in the motor, and controller 52 that controls inverter 51 by pulse width modulation (PWM), for example, and have functions to be implemented by controller 52 controlling inverter 51 by PWM based on the corrected position command and the position of motor 70.

### <Operation>

Hereinafter, operation of positioning system 1 having the above configuration will be described.

Positioning system 1 instructs a command position using a position command, the command position allowing load 80 to be positioned at a target position by motor 70 moving to the command position when positioning system 1 is in an ideal state.

Unfortunately, even when motor 70 moves to the command position, load 80 may be actually positioned at a position different from the target position due to influence of deformation, thermal expansion, and the like of members constituting positioning system 1. That is, a deviation (this deviation is also referred to below as "target position deviation") may occur between an actual position of load 80 positioned by motor 70 moving to the command position and the target position.

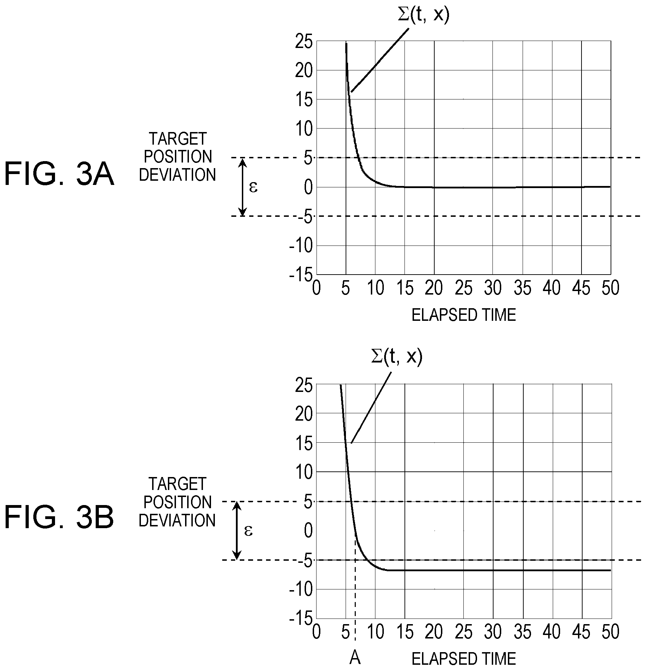

Fig. 3A is a schematic diagram illustrating an example of a state in which motor 70 moves to the command position with no target position deviation to position load 80 at the target position when assuming that controller 50 control motor 70 based on a position command before being corrected by corrector 40 instead of the corrected position command corrected by corrector 40. Fig. 3A has a horizontal axis representing elapsed time, and a vertical axis representing target position deviation.

As illustrated in Fig. 3A, no target position deviation allows load 80 to be positioned at the target position without correcting the position command.

In contrast, Fig. 3B is a schematic diagram illustrating an example of a state in which motor 70 moves to the command position with a target position deviation to position load 80 at a position different from the target position when assuming that controller 50 controls motor 70 based on a position command before being corrected by corrector 40 instead of the corrected position command corrected by corrector 40. Fig. 3B has a horizontal axis representing elapsed time, and a vertical axis representing target position deviation.

As illustrated in Fig. 3B, the target position deviation causes load 80 to be positioned at a position beyond predetermined range ε from the target position, for example, unless the position command is corrected.

Positioning system 1 can position load 80 within a predetermined range from a target position by performing position deviation correction processing by motor control device 10 even with a target position deviation that causes load 80 to be positioned at a position beyond the predetermined range from the target position (also referred to below as "beyond-positioning target position deviation") unless the position command is corrected.

Hereinafter, the position deviation correction processing performed by motor control device 10 will be described with reference to the drawings.

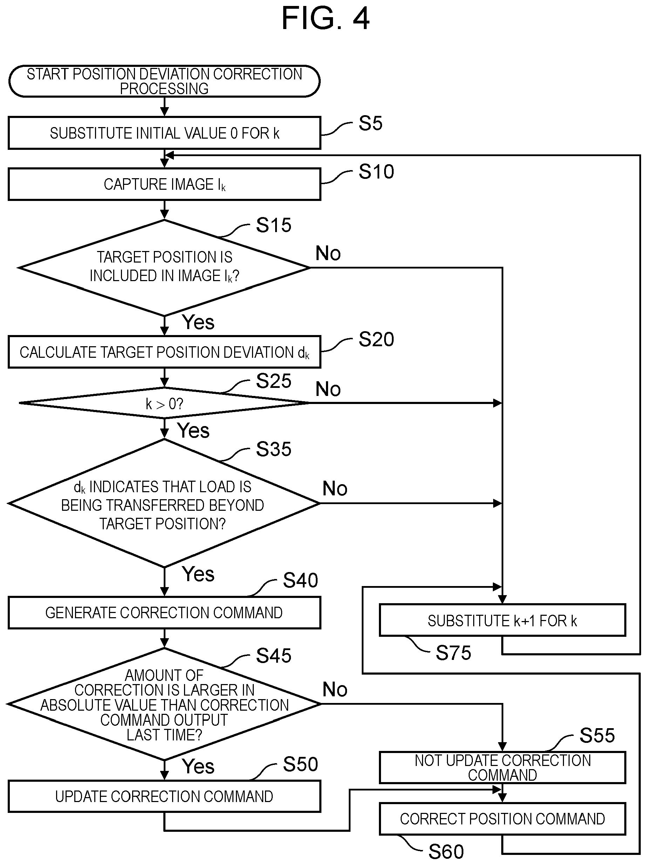

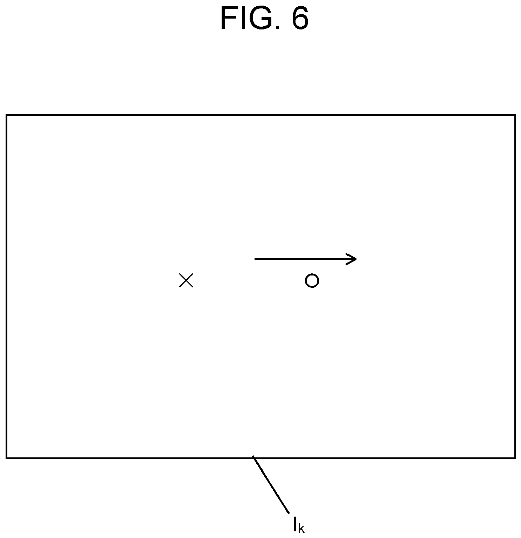

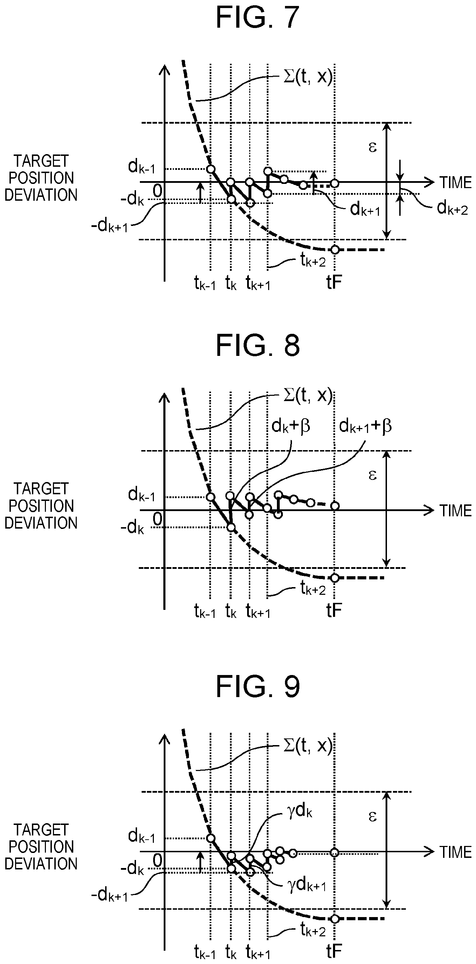

Fig. 4 is a flowchart of position deviation correction processing performed by corrector 40. The position deviation correction processing is performed to correct the position command to prevent load 80 from being positioned at a position beyond a predetermined range from the target position, and control motor 70 based on the corrected position command. The position deviation correction processing may be started when calculator 62 determines that the target position is included in an image captured by camera 61, for example, or may be started when a user using positioning system 1 performs an operation to start the position deviation correction processing on motor control device 10, for example. Fig. 6 is a schematic diagram illustrating image Iₖ captured by camera 61 at time tₖ. Fig. 6 illustrates a circle indicating a position of load 80, a cross indicating the target position, and an arrow indicating a moving direction of camera 61. Camera 61 moves in the same direction as load 80. Fig. 7 is a diagram illustrating whether motor control device 10 of the present disclosure causes load 80 to exceed a target position and how to control load 80 with motor control device 10 when load 80 exceeds the target position.

When the position deviation correction processing is started in Fig. 4, motor control device 10 substitutes initial value 0 for an integer-type variable k that can take an integer value of 0 or more (step S5).

When initial value 0 is substituted for the integer-type variable k, camera 61 captures image Iₖ (step S10).

When image Iₖ is captured, calculator 62 performs image processing on image Iₖ and determines whether the target position is included in image Iₖ (step S15).

When it is determined that the target position is included in image Iₖ in the processing of step S15 (step S15: Yes), calculator 62 performs further image processing on image Iₖ and calculates target position deviation dₖ (step S20).

When target position deviation dₖ is calculated, motor control device 10 checks whether a value substituted for integer-type variable k is larger than 0 (step S25).

When the value substituted for integer-type variable k is larger than 0 in the processing of step S25 (step S25: Yes), correction command generator 30 determines whether target position deviation dₖ calculated by calculator 62 indicates that load 80 exceeds the target position (step S35). When target position deviation dₖ calculated indicates that load 80 does not exceed the target position in the processing of step S35 (step S35: No), the position command is not corrected. When target position deviation dₖ calculated indicates that load 80 moves beyond the target position (step S35: Yes), the position command is corrected. Fig. 7 illustrates that load 80 is at a positive position and does not exceed the target position at time tₖ₋₁, so that the position command is not corrected at time tₖ₋₁. Fig. 7 also illustrates that load 80 is at a negative position and exceeds the target position at time tₖ, so that the position command is corrected at time tₖ. When load 80 exceeds the target position at time tₖ, load 80 is located at position (-dₖ). That is, target position deviation dₖ takes 0 or a positive value. Fig. 7 indicates tF that represents time at which load 80 has a position change of almost 0. Fig. 7 indicates Σ(t, x) that is a function representing a curve illustrated in Fig. 3A or 3B, i.e., a function representing a position command for controlling load 80. The function shows t that represents time, and x that represents a position of load 80, and the target position is represented as x = 0. Fig. 7 shows "0" that is the target position of load 80. Fig. 7 shows ε that represents a size of a predetermined range. The predetermined range is ±0.5ε centered on the position (x = 0). When load 80 is within the predetermined range at time tF, movement of load 80 is ended. Target position deviation dₖ, time tF, size ε of the predetermined range, and Σ(t, x), which are described above, are identical in meaning to those in Figs. 8 to 11.

Returning to Fig. 4, when target position deviation dₖ calculated by calculator 62 indicates that load 80 is positioned beyond the target position in the processing of step S35 (step S35: Yes), correction command generator 30 generates a correction command for correcting the position command to instruct a correction command position shifted in the positive direction by target position deviation dₖ from the command position instructed by the position command (step S40). Then, correction command generator 30 determines whether the amount of correction (here, target position deviation dₖ) in the correction command being newly generated has an absolute value larger than that of the amount of correction in the correction command being output last time (step S45).

When the amount of correction in the correction command being newly generated has the absolute value larger than that of the amount of correction in the correction command being output last time in the processing of step S45 (step S45: Yes, see Fig. 7), correction command generator 30 updates the correction command being output last time with the correction command being newly generated (step S50), and outputs the updated correction command. Fig. 7 shows dₖ < dₖ₊₁, and the amount of correction is updated from dₖ to dₖ₊₁ at tₖ₊₁.

When the amount of correction in the correction command being newly generated has an absolute value smaller than or equal to that of the amount of correction in the correction command being output last time in the processing of step S45 (step S45: No), correction command generator 30 does not update the correction command being output last time with the correction command being newly generated (step S55), and outputs the correction command being output last time. Fig. 7 shows dₖ₊₂ < dₖ₊₁, and thus the amount of correction is dₖ₊₁ at tₖ₊₂.

When the processing of step S50 ends or the processing of step S55 ends, corrector 40 corrects the position command with the correction command output from correction command generator 30 (step S60) and outputs the corrected position command.

Motor control device 10 substitutes k+1 for integer-type variable k (step S75), and allows the processing to proceed to step S10 in cases where it is determined that the target position is not included in image Iₖ in the processing of step S15 (step S15: No), where it is determined that the value substituted for integer-type variable k is not larger than 0 in the processing of step S25 (step S25: No), where target position deviation dₖ calculated does not indicate that load 80 is positioned beyond the target position in the processing of step S35 (step S35: No), and where the processing of step S60 is ended.

When an operation command for starting the position deviation correction processing is input after completion of the position deviation correction processing, integer-type variable k is reset to 0.

Hereinafter, a specific example of behavior of motor control device 10 will be described with reference to the drawings, the specific example showing that motor control device 10 performs the position deviation correction processing in positioning system 1 causing the beyond-positioning target position deviation illustrated in Fig. 3B.

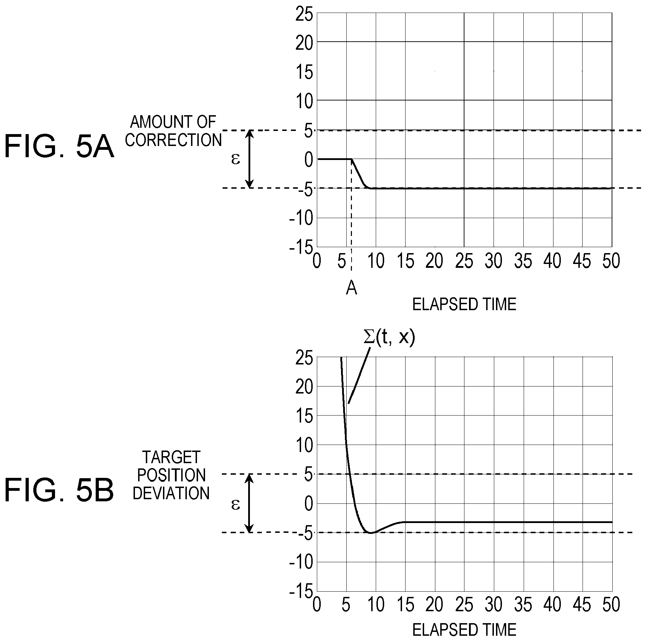

Fig. 5A is a schematic diagram illustrating an example of a temporal change of the amount of correction in the correction command output by correction command generator 30 when motor control device 10 performs the position deviation correction processing in positioning system 1 causing the beyond-positioning target position deviation illustrated in Fig. 3B. Fig. 5A has a horizontal axis representing elapsed time, and a vertical axis representing the amount of correction.

Fig. 5B is a schematic diagram illustrating an example of a state in which load 80 is positioned within a predetermined range from the target position when motor control device 10 performs the position deviation correction processing in positioning system 1 causing the beyond-positioning target position deviation illustrated in Fig. 3B. Fig. 5B has a horizontal axis representing elapsed time, and a vertical axis representing target position deviation.

As illustrated in Fig. 3B, when a position of load 80 falls below 0 after time just elapses from time A, i.e., when the target position deviation starts to indicate that the load 80 is positioned beyond the target position, correction command generator 30 starts to generate a correction command that allows the amount of correction to be the target position deviation as illustrated in Fig. 5A. Subsequently, correction command generator 30 updates and outputs the correction command to maintain a maximum value of an absolute value of a correction value. Controller 50 controls motor 70 so that motor 70 moves to a position instructed by the corrected position command corrected in response to the correction command to maintain the maximum value of the absolute value of the correction value. This control allows load 80 to be positioned within predetermined range ε from the target position as illustrated in Fig. 5B.

When time tₖ exceeds time tF, the position deviation correction processing illustrated in the flowchart of Fig. 4 is ended.

### <Consideration>

As described above, motor control device 10 calculates the target position deviation and corrects the position command based on the calculated target position deviation. Thus, information related to load 80 does not need to be fed back to a host controller side that outputs a position command to motor control device 10. Then, motor control device 10 is capable of controlling a motor to achieve quick positioning of load 80 within a predetermined range from the target position. Motor control device 10 also does not necessarily need to decelerate positioning speed of load 80 even when load 80 approaches the target position. Thus, motor control device 10 is capable of controlling the motor to achieve quicker positioning of load 80 within the predetermined range from the target position. The exemplary embodiment above is also applicable to a case where load 80 is at a position that is negative and smaller than -0.5ε (i.e., outside the range of ±0.5ε) at time tₖ.

### (Supplementary)

Although the motor control device according to an aspect of the present disclosure has been described above based on the exemplary embodiments, the present disclosure is not limited to the exemplary embodiments. Configurations in which various variations conceived by those skilled in the art are applied to the exemplary embodiments, and an aspect formed by combining components in different exemplary embodiments may be included within the scope of one or more aspects of the present disclosure, without departing from the gist of the present disclosure. Hereinafter, another configuration example of the motor control device according to an aspect of the present disclosure will be described.

### (1) First another configuration example

Motor control device 10 has been described in the exemplary embodiments in which motor control device 10 is provided inside with target position deviation calculator 60 that calculates the target position deviation, and correction command generator 30 acquires the target position deviation calculated by target position deviation calculator 60.

Alternatively, motor control device 10 may not include target position deviation calculator 60, and correction command generator 30 may acquire the target position deviation from an external device of motor control device 10, as another configuration example.

### (2) Second and third another configuration examples

The exemplary embodiment shows a configuration in which when target position deviation dₖ indicates positioning beyond the target position as illustrated in step S35 of Fig. 4, and in which the amount of correction is set as the amount of dₖ, and the amount of correction is peak held to have a corrected value larger in absolute value than a value output last time as illustrated in step S45 of Fig. 4. Besides the configuration in which the amount of correction is peak held, the amount of correction may be obtained by adding a predetermined offset β to dₖ as illustrated in Fig. 8, or obtained by multiplying dₖ by weighting coefficient γ as illustrated in Fig. 9. That is, the correction command generator may set the amount of correction using a value obtained by adding a predetermined offset β to the target position deviation or a value obtained by multiplying the target position deviation by predetermined weighting coefficient γ. Fig. 8 is a diagram illustrating a second another configuration example in which a position command is corrected with a value obtained by adding predetermined offset β to target position deviation dₖ. Fig. 9 is a diagram illustrating a third another configuration example in which a position command is corrected with the amount of correction that is a value obtained by multiplying target position deviation dₖ by weighting coefficient γ. Both the second another configuration example and the third another configuration example show that load 80 is at a position beyond the target position at time tₖ.

Fig. 8 illustrates that load 80 is at a position beyond the target position at time tₖ, and thus the amount of correction is dₖ + β. That is, the position command is corrected at time tₖ with addition of dₖ + β. When load 80 is at a position beyond the target position in Fig. 8, a value obtained by adding predetermined offset β to the target position deviation is set as the amount of correction.

Load 80 can be corrected for position only at time tₖ by setting β to a predetermined value larger than dₖ, for example, in Fig. 8, and can be subsequently located at a position within a range of ±0.5ε and without beyond the target position. The amount of correction of load 80 may be set in this manner.

Fig. 9 illustrates that load 80 is at a position beyond the target position at time tₖ, and thus the amount of correction is γdₖ. That is, the position command is corrected at time tₖ with addition of γdₖ. Note that γ is a number larger than 0. When load 80 is at a position beyond the target position in Fig. 9, a value obtained by multiplying the target position deviation by weighting coefficient γ is set as the amount of correction.

Load 80 can be corrected for position only at time tₖ by setting γ to a predetermined value larger than 1, for example, in Fig. 9, and can be subsequently located at a position within a range of ±0.5ε and without beyond the target position. The amount of correction of load 80 may be set in this manner.

The processing illustrated in steps S35 and S45 of Fig. 4 causes a problem in that the processing illustrated in the exemplary embodiment does not allow the correction command to be as large as the amount of position deviation, thereby resulting in incomplete coincidence with the target position even when the correction command converges within target accuracy, and thus a positional deviation remains even after stop. Using the configuration illustrated in Fig. 8 or 9 reduces the amount of position deviation remaining after the stop, and thus enables more accurate positioning.

### (3) Fourth another configuration example

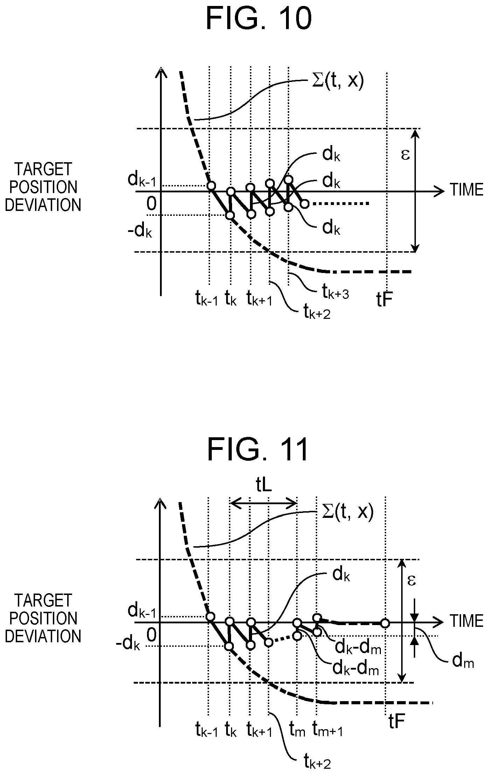

The exemplary embodiment shows a configuration in which when target position deviation dₖ indicates positioning beyond the target position as illustrated in step S35 of Fig. 4, and in which the amount of correction is set as the amount of dₖ, and the amount of correction is peak held to have a corrected value larger in absolute value than a value output last time as illustrated in step S45 of Fig. 4. Besides this configuration, when dₖ does not change while indicating exceedance from the target value even after elapse of predetermined time as illustrated in Fig. 10, a value of dₖ this time may be subtracted from a value of the amount of correction last time as illustrated in Fig. 11. That is, when the target position deviation does not change even when a predetermined time elapses while indicating that the load exceeds the target position, the correction command generator may set the amount of correction of the next correction command by subtracting a target position deviation input subsequently from the amount of correction of the correction command output. Fig. 10 is a diagram illustrating target position deviation dₖ in the present exemplary embodiment, target position deviation dₖ having no change while indicating that the target position deviation exceeds a target value even after a predetermined time elapses. Fig. 11 is a diagram illustrating a fourth another configuration example in which a new amount of correction is set after target position deviation dₖ exceeds a target value and a predetermined time elapses. Figs. 10 and 11 illustrate that load 80 is at a position exceeding the target position at time tₖ.

Fig. 10 illustrates that load 80 is at a position beyond the target position at time tₖ, and thus the amount of correction is dₖ. At this time, the position of load 80 is corrected with addition of position command dₖ. Subsequently, load 80 exists at a position beyond the target position by dₖ₊₁ at time tₖ₊₁. Here, when dₖ₊₁ is less than dₖ, the amount of correction at time tₖ₋₁ is dₖ. When dₖ₊₁ is less than dₖ, dₖ₊₂ is less than dₖ and dₖ₊₃ is less than dₖ at time tₖ₊₂ and time tₖ₊₃, respectively. That is, a state in which the amount of correction is dₖ continues for a certain period for load 80. Thus, the amount of correction may be changed after elapse of predetermined time tL as illustrated in Fig. 11.

Fig. 11 illustrates that when load 80 is at a position beyond the target position at time tm (m is an integer and larger than k) after elapse of predetermined time tL from time tₖ, the target position deviation of load 80 is dₘ. Note that dₘ is less than dₖ and tL equals to (tₘ - tₖ). At this time, position correction is performed on load 80 by setting the amount of correction to (dₖ - dₘ) to obtain a new position of load 80. After time tₘ, the amount of correction for the position of load 80 is set to (dₖ - dₘ). That is, after time tₘ, the position of load 80 is corrected with (dₖ - dₘ) set as a new amount of correction.

When predetermined time tL elapses from time tₘ, a new amount of correction may be determined by the same method as described above.

The first to third configuration examples above are also applicable to a case where load 80 is at a position that is a position negative and smaller than -0.5ε (i.e., outside the range of ±0.5ε) at time tₖ.

The processing illustrated in steps S35 and S45 of Fig. 4 causes a problem in that the processing illustrated in the exemplary embodiment does not allow the correction command to be as large as the amount of position deviation, thereby resulting in incomplete coincidence with the target position even when the correction command converges within target accuracy, and thus a positional deviation remains even after stop. Using the configuration illustrated in Fig. 11 reduces the amount of position deviation remaining after the stop, and thus enables more accurate positioning.

### INDUSTRIAL APPLICABILITY

The present disclosure is widely applicable to a motor control device that controls a motor.

### REFERENCE MARKS IN THE DRAWINGS

- 1: positioning system
- 10: motor control device
- 11: host controller
- 30: correction command generator
- 31: processor
- 32: memory
- 40: corrector
- 41: processor
- 42: memory
- 50: controller
- 51: inverter
- 52: controller
- 60: target position deviation calculator
- 61: camera
- 62: calculator
- 63: processor
- 64: memory
- 66: lens
- 67: solid-state imaging element
- 68: memory
- 70: motor
- 71, 72: connecting part
- 80: load
- 90: motor position detector
- 100: guide
- 110: stage
- 120: work object
- 130: field of view

## Claims

1. A motor control device configured to control a motor that moves a load to a target position based on a position command for instructing a position of the motor, the motor control device comprising:
a correction command generator that acquires a target position deviation indicating a difference between a position of the load and the target position, and generates a correction command for correcting the position command based on the target position deviation when the target position deviation indicates that the load is positioned beyond the target position;
a corrector that corrects the position command based on the correction command to generate a corrected position command; and
a controller that controls the motor based on the corrected position command and a position of the motor.

2. The motor control device according to Claim 1, wherein the correction command generator generates the correction command for correcting the position command to instruct a correction command position shifted by the target position deviation from a command position instructed by the position command.

3. The motor control device according to Claim 2, wherein when an amount of correction according to the correction command has an absolute value smaller than or equal to an absolute value of the amount of correction according to the correction command input last time from the correction command generator, the corrector does not update the correction command input last time from the correction command generator.

4. The motor control device according to Claim 2, wherein the correction command generator sets an amount of correction using a value obtained by adding a predetermined offset to the target position deviation or a value obtained by multiplying the target position deviation by a predetermined weighting coefficient.

5. The motor control device according to Claim 2, wherein when the target position deviation does not change even when a predetermined time elapses while indicating that the load exceeds the target position, the correction command generator sets an amount of correction of a next correction command by subtracting a target position deviation input subsequently from the amount of correction of the correction command output last time.

6. The motor control device according to any one of Claims 1 to 5, further comprising a target position deviation calculator that calculates the target position deviation, the target position deviation calculator including
a camera that is positioned together with the load by the motor and captures an image, and
a calculator that calculates the target position deviation when the target position is included in the image based on the image captured by the camera.
